(19) 

**Europäisches Patentamt**
**European Patent Office**
**Office européen des brevets**

(11) **EP 4 764 445 A1**

(12) **EUROPEAN PATENT APPLICATION**

(43) Date of publication:
24.06.2026 Bulletin 2026/26

(51) International Patent Classification (IPC):
*G01M 13/02* [(2019.01)] *G01M 17/007* [(2006.01)]

(21) Application number: 25224868.7

(22) Date of filing: 18.12.2025

(52) Cooperative Patent Classification (CPC):
**G01M 17/007; G01M 13/02**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **19.12.2024 IT 202400029166**

(71) Applicant: **FERRARI S.p.A.**
**41100 Modena (IT)**

(72) Inventors:
• **ZANCHINI, Michele**
**41100 MODENA (IT)**
• **CANESTRI, Jacopo**
**41100 MODENA (IT)**
• **INFURNA, Marco**
**41100 MODENA (IT)**

(74) Representative: **Studio Torta S.p.A.**
**Via Viotti, 9**
**10121 Torino (IT)**

(54) **SYSTEM AND METHOD FOR MONITORING WEAR OF AXLE SHAFTS OF A VEHICLE**

(57) A system (12) for monitoring wear of axle shafts (10) of a transmission system (6) of a vehicle (1) is described, equipped with a processing unit (14) designed to: acquire, during use of the vehicle (1), current values of operating parameters associated with the operation of the transmission system (6); determine, as a function of the current values of the operating parameters, continuously over time, instantaneous damage ($D_i$) to the axle shafts (10); determine a total damage ($D_{tot}$) to the axle shafts (10) as a combination of the instantaneous damage ($D_i$) determined over time; and estimate a wear condition of the axle shafts (10) as a function of the determination of the total damage ($D_{tot}$).

FIG. 2

EP 4 764 445 A1

**Description**

CROSS-REFERENCE TO RELATED APPLICATIONS

This patent application claims priority from Italian patent application no. 102024000029166 filed on December 19, 2024, the entire disclosure of which is incorporated herein by reference.

TECHNICAL FIELD

The present solution relates to a system and method for monitoring wear of axle shafts of a vehicle, in particular of a motor vehicle.

PRIOR ART

As is known, axle shafts are components of a vehicle that form part of the transmission system, which allows transmitting the energy developed by the engine (whether thermal or hybrid engine or electric motor) to the wheels. In particular, the traction axis is divided into two axle shafts by the differential unit (coupled to the engine by means of the drive shaft) and the axle shafts are coupled to the differential (or to the electric axle) and to the drive wheels by means of respective joints.

It is common practice for the manufacturers of vehicles, in particular motor vehicles, to consider the axle shafts as "for life" components, i.e. components intended to substantially last for an entire operating life of the vehicle, without being subject to replacement.

However, the increase in the performance and the masses required by modern vehicles, in particular motor vehicles equipped with electric motors, requires the use of increasingly larger axle shafts in order to be able to guarantee the same levels of comfort for the use of the vehicle and comply with the above-mentioned condition of a "for life" duration.

The use of larger axle shafts involves a consequent increase in masses, inertia and consumptions due to the larger dimensions of the components.

Furthermore, the axle shaft is generally considered as the "fuse" element, i.e. the first element of the transmission that can be subject to breaking, before other components such as the differential.

An over-dimensioning of the axle shaft (to guarantee the above-mentioned vehicle comfort) can thus require joints and a transmission shaft with a nominal torque capacity similar to or greater than the dimensioning torque of the gears of the axle or of the differential, with consequent possible breaking of such components before that of the axle shaft and thus loss of the functionality of "fuse" element of the same axle shaft.

Should instead this over-dimensioning not be made and the usual sizes be maintained, the high performance required (for example by the modern electric motors) could lead to the premature damaging of the component, with a corresponding generation of unacceptable noise and/or vibrations during the life of the motor vehicle, generating problems of reliability or anyway a perception of reduced quality by the user.

OBJECT OF THE INVENTION

The object of the present discussion is in general to provide a solution for monitoring wear of axle shafts of a vehicle, which can allow overcoming or anyway limiting the problems highlighted in the foregoing.

In accordance with the objective indicated above, according to the present solution, a system and a method are provided, as defined in the appended claims.

BRIEF DESCRIPTION OF THE FIGURES

The present solution will now be described with reference to the accompanying drawings, which illustrate a nonlimiting example embodiment thereof, wherein:

- Figure 1 schematically shows a motor vehicle equipped with a system for monitoring wear of axle shafts, in accordance with the present solution;
- Figure 2 is a schematic block diagram of the monitoring system; and
- Figures 3 and 4 show plots of quantities used by the monitoring system.

DETAILED DESCRIPTION OF THE EMBODIMENTS

As it will be described in detail in the following, an aspect of the present solution provides, in general, for implementing a system for monitoring wear of axle shafts of a vehicle by means of an algorithm which, by reading operating parameters associated with the operation of the transmission system of the vehicle, is able to determine reaching of a level of damage of the axle shafts corresponding to an advisable maintenance or replacement of the same axle shafts for excessive wear due to the load cycles to which they have been subjected, in such manner avoiding in advance the occurrence of vibrational phenomena and/or noise and guaranteeing the correct level of required comfort (without resorting to an over-dimensioning of the components).

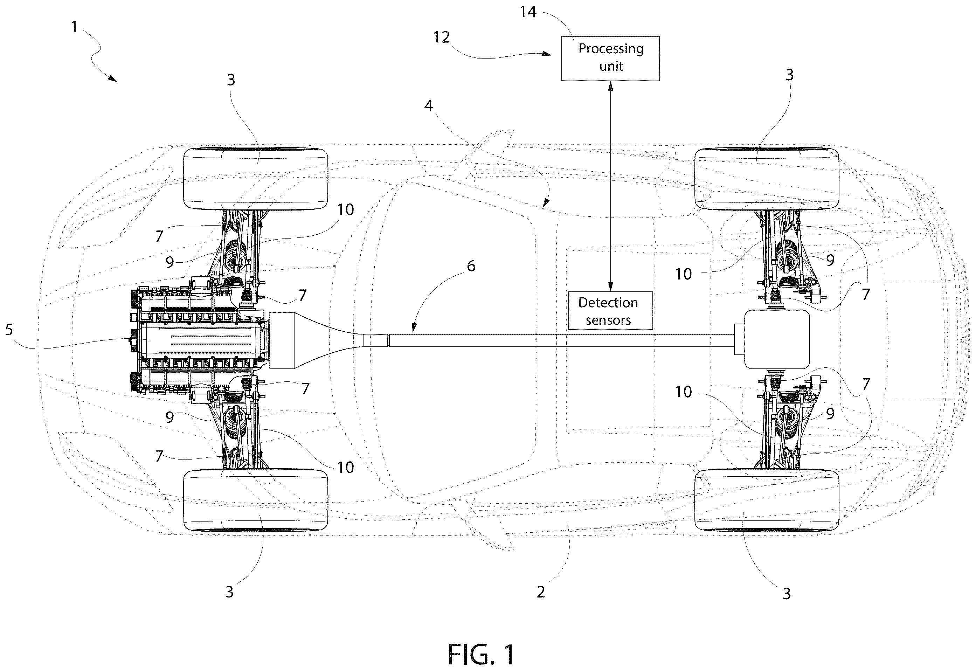

Figure 1 shows a vehicle, in particular a motor vehicle 1 (which can be of the traditional or thermal type, hybrid type or electric type), provided with a body 2 resting on the ground by means of wheels 3 and defining within it a passenger compartment 4 for a driver and possible passengers.

As is schematically shown, the motor vehicle 1 is equipped with a propulsion system 5 (thermal or hybrid engine or electric motor) and a transmission system 6, configured to transmit the energy developed by the engine to the wheels 3.

In a known manner, which is not described in detail herein, such transmission system 6 comprises axle shafts 10, coupled to respective wheels 3 by means of joints 7 and coupled to a differential member of the transmission system 6 by means of further joints 7 (having respective characteristics).

According to an aspect of the present solution, the motor vehicle 1 comprises a monitoring system 12, configured to monitor the wear of the axle shafts 10 continuously over time during, and as a function of, the use of the same motor vehicle 1 and to determine reaching of a level of damage of the axle shafts 10 corresponding to an advisable replacement of the same axle shafts 10 for excessive wear due to the load cycles to which they have been subjected.

Such monitoring system 12 comprises a (microprocessor, microcontroller or the like) digital processing unit 14 configured to implement an algorithm designed to carry out the above-mentioned monitoring of the wear of the axle shafts 10, continuously over time.

To such end, the digital processing unit 14 comprises a non-volatile memory that stores software instructions (firmware) designed to carry out the algorithm.

In a possible implementation, such digital processing unit 14 can coincide with, or be part of, an electronic control unit (ECU) of the motor vehicle 1, designed to supervise the general operation of the same motor vehicle 1 (in a known manner, not illustrated herein).

The monitoring system 12 further comprises a plurality of detection sensors 16, operatively coupled to respective components of the transmission system 6 and configured to provide respective detection signals indicative of respective operating parameters associated with the operation of the transmission system 6.

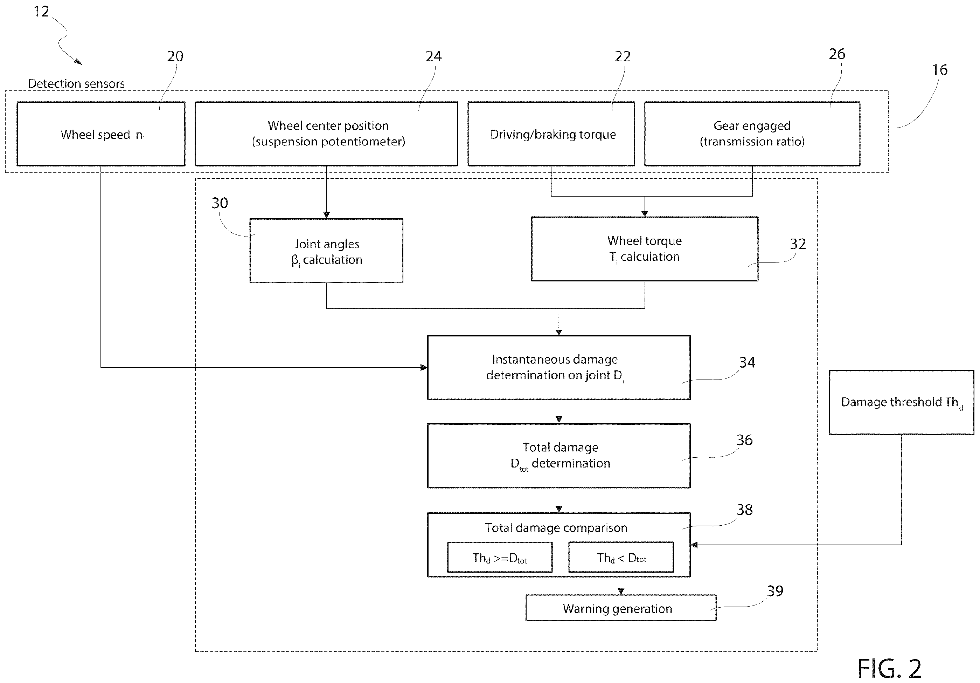

In greater detail, according to a possible embodiment, schematically illustrated in Figure 2, such detection sensors 16 comprise:

first sensor elements 20, for example of the phonic wheel type, operatively coupled to the wheels 3 of the motor vehicle 1, in particular to the drive wheels, and configured to determine an instantaneous rotational speed $n_i$ thereof (for example, in terms of number of revolutions per time unit, for example per minute);

second sensor elements 22, operatively coupled to the engine of the motor vehicle 1 and configured to detect a corresponding driving and/or (in the case of electric motors) braking torque;

third sensor elements 24, also coupled to the wheels 3 of the motor vehicle 1, configured to determine a wheel center position (or wheel hub, i.e. the central part of the wheel, designed to directly accommodate the axle wheel, or the rolling members that facilitate the rotation, ball bearings, roller bearings, bushings, etc.); for example, such sensor elements are potentiometers associated with the suspensions, indicated by 9 in Figure 1, and the wheel center position is determined as a function of a respective suspension travel 9;

fourth sensor elements 26, designed to provide information about the gear engaged, or the transmission ratio used.

The detection sensors 16 are configured to generate, continuously over time, respective detection signals, which are provided to the digital processing unit 14, for example by means of the CAN (Controller Area Network) line or bus of the motor vehicle 1, so as to be acquired by the same digital processing unit 14 at a certain sampling frequency.

In other words, the digital processing unit 14 acquires continuously over time samples (or current or instantaneous values) of the above-mentioned detection signals, which relate to a respective time instant in the operation of the transmission system 6 of the motor vehicle 1.

As is schematically shown in the above-mentioned Figure 2, the digital processing unit 14, for execution of the algorithm for monitoring wear of the axle shafts 6, comprises a first computing stage 30, configured to determine, as a function of the wheel center position signals, respective joint angles $\beta_i$ for the different wheels 3, at least for the drive wheels of the motor vehicle 1.

Such joint angles $\beta_i$ can be defined, in a known manner, as the composition in modulus of the angles of the individual joints (wheel side and gearbox side) on a horizontal longitudinal plane XY of the vehicle and on a vertical transverse plane YZ of the same vehicle. For example, such joint angles $\beta_i$ can include: an angle formed between the axis of the axle shaft and the axis of the gearbox-side joint on the plane XY; an angle formed between the axis of the axle shaft and the axis of the gearbox-side joint on the plane YZ; an angle formed between the axis of the axle shaft and the axis of the wheel-side joint on the plane XY; an angle formed between the axis of the axle shaft and the axis of the wheel-side joint on the plane YZ.

In particular, the first computing stage 30 is configured to determine the joint angles $\beta_i$ as a function of geometric, constructive and kinematic characteristics of the transmission system 6 and of the suspensions 9 of the motor vehicle 1.

The digital processing unit 14 further comprises a second computing stage 32, configured to determine, as a function of the (driving and/or braking) torque signals and transmission ratio signals, corresponding values of wheel torque $T_i$, i.e. the torque delivered by drive or braking, at the individual wheels 3 (in particular, the drive wheels).

The digital processing unit 14 comprises a determination stage 34, operatively coupled to the above-mentioned first and second computing stages 30, 32, configured to determine values of instantaneous joint damage $D_i$, relative to the various joints 7, as a function of the respective current values of the joint angle $\beta_i$ and wheel torque $T_i$.

Such value of instantaneous (or single) joint

damage $D_i$ thus refers to a given sampling instant and an associated instantaneous operating condition of the transmission system 6.

In detail, according to an aspect of the present solution, the determination stage 34 is configured to determine the values of instantaneous joint damage $D_i$, using look-up tables associated with the constructive and geometric characteristics of the axle shafts 10 and which correlate the values of the joint angles $\beta_i$ and wheel torque $T_i$ to respective values of instantaneous damage based on damage laws (specific to the components and determined, for example, in a test phase for testing the same components following their manufacture).

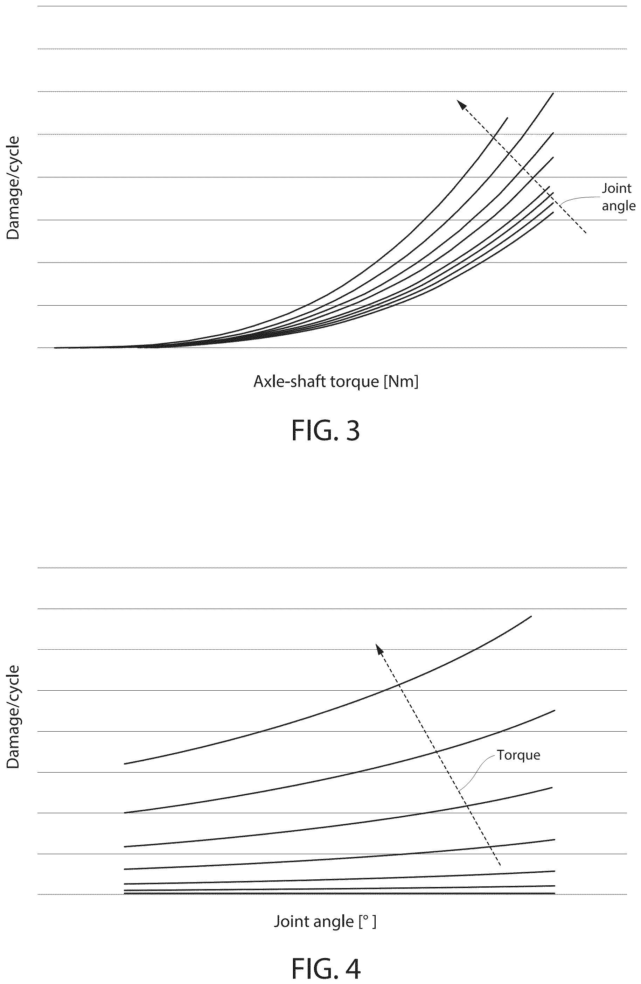

In this regard, Figure 3 shows plots of the trend of the damage law per cycle as a function of the torque, for different values of joint angles $\beta_i$.

Figure 4 shows corresponding plots of the trend of the damage law per cycle as a function of the angle, for different values of torque $T_i$.

In essence, the digital processing unit 14 is thus configured to:

determine the joint angles $\beta_i$ of the axle shafts 10 as a function of the respective suspension travel; and
determine a single or instantaneous damage $D_i$ of the joints 7 of the axle shafts 10 in relation to the instantaneous power (torque delivered by wheel rotational speed) and to the same joint angles $\beta_i$.

The processing unit 14 further comprises a damage computing stage 36, coupled to the above-mentioned determination stage 34 and configured to implement an appropriate function for combining, over time, the values of instantaneous joint damage $D_i$ determined by the same determination stage 34, in order to calculate (and update continuously over time, in particular in an incremental manner) a value of total damage $D_{tot}$ to which the axle shafts 10 are subjected (this calculation is advantageously performed for each of the axle shafts 10 using the detection signals associated therewith).

In particular, according to an aspect of the present solution, the damage computing stage 36 is configured to implement a summation of the values of instantaneous (or single) joint damage $D_i$, received at the successive sampling instants:

$$D_{tot} = \sum D_i$$

The digital processing unit 14 further comprises a verification stage 38 configured to perform a comparison between the value of total damage $D_{tot}$ (updated, in particular in an incremental manner, at each sampling) and a limit threshold value $Th_D$, indicative of reaching of a relevant degree of wear of the corresponding axle shafts 10.

Until the above-mentioned value of total da-

mage $D_{tot}$ (updated at each received sample) remains below the limit threshold value $Th_D$, the digital processing unit 14 does not carry out any further actions.

On the contrary, when the value of total damage $D_{tot}$ is greater than (or equal to) the limit threshold value $Th_D$, the digital processing unit 14 is configured to determine reaching of a wear limit of a corresponding axle shaft 10.

The digital processing unit 14 thus comprises a generation stage 39, configured to generate and then output a wear warning.

Such wear warning can, for example, be received by the control unit (ECU) of the motor vehicle 1, determine the turning on of a warning light or similar signaling element for the user of the motor vehicle 1, or cause the activation of a diagnostic trouble code (DTC) designed to be stored in the control unit of the motor vehicle 1 to subsequently be identified during a diagnosis.

In general, such wear warning is indicative of reaching by the axle shaft 10 of an end of service life, i.e. of the suitability (or need) to replace the same component. For example, the continued use of the axle shaft 10 could involve the arising of noise, vibrations up to, in extreme cases, the breaking of the component.

The above-mentioned limit threshold value $Th_D$ depends on the characteristics of the components of the transmission system 6 of the motor vehicle 1 and of the same motor vehicle 1, and can be determined experimentally in a preliminary test phase that takes into account, among other features, values that are considered acceptable for noise and/or vibrations generated in the passenger compartment 4 of the motor vehicle 1, as well as specific tests on the axle shaft 10 and furthermore the drivability of the same motor vehicle 1.

The advantages that the present solution allows to achieve are clear from what has been discussed.

In any case, it is underlined that such solution allows avoiding the "over-dimensioning" of the axle shafts 10 of the motor vehicle 1, since it allows estimating, continuously throughout the life of the same motor vehicle 1, the wear of the axle shafts 10 notifying in advance of the need for maintenance or replacement, avoiding in such manner loss in functionality or performance and in any case guaranteeing the levels of comfort required for the use of the motor vehicle 1.

In general, the described monitoring system 12 thus allows:

guaranteeing a high running comfort without over-dimensioning the axle shafts 10;
obtaining a saving in masses and inertia and a better performance of the joints 7, with consequent energy and fuel savings;
restoring the correct sequence of failure of the components of the transmission system 6 (with the axle shafts 10 that therefore remain the "fuse" elements, for example before the axle, gearbox or differential);

possibility of highlighting the state of wear of the axle shafts during servicing or checks, so as to schedule in a preventive manner maintenance or replacement operations.

Finally, it is clear that modifications and variations can be made to what described without thereby departing from the scope of the present invention, as defined by the appended claims.

It is in particular reiterated that the described solution can be advantageously applied to any type of vehicle, in particular motor vehicles, regardless of the propulsion system used (thermal, hybrid or electric).

## Claims

1. A system (12) for monitoring wear of axle shafts (10) of a transmission system (6) of a vehicle (1), comprising a processing unit (14), configured to:

   acquire, during use of the vehicle (1), current values of operating parameters associated with the operation of the transmission system (6);
   determine, as a function of said current values of the operating parameters, continuously over time, instantaneous damage ($D_i$) to the axle shafts (10);
   determine a total damage ($D_{tot}$) to said axle shafts (10) as a combination of the instantaneous damage (Di) determined over time; and
   estimate a wear condition of said axle shafts (10) as a function of the determination of said total damage ($D_{tot}$).

2. The system according to claim 1, wherein said processing unit (14) is configured to determine reaching of a level of total damage ($D_{tot}$) of the axle shafts (10) corresponding to an advisable maintenance or replacement.

3. The system according to claim 2, wherein said processing unit (14) comprises a verification stage (38) configured to perform a comparison between the value of total damage ($D_{tot}$) and a limit threshold value ($Th_D$) indicative of reaching a relevant degree of wear of the axle shafts (10).

4. The system according to claim 3, wherein, if the value of total damage ($D_{tot}$) is greater than the limit threshold value ($Th_D$), the digital processing unit (14) is configured to generate a warning of reached wear limit for said axle shafts (10).

5. The system according to any one of the preceding claims, comprising a plurality of detection sensors (16), operatively coupled to respective components of the transmission system (6) and configured to provide respective detection signals indicative of respective of said operating parameters associated with the operation of the transmission system (6); wherein said processing unit (14) is operatively coupled to said detection sensors (16) to acquire over time, at respective sampling instants, values of said detection signals for the determination of said current values of the operating parameters and of said instantaneous damage ($D_i$) to the axle shafts (10).

6. The system according to claim 5, wherein said detection sensors (16) comprise:

   first sensor elements (20), designed to be operatively coupled to wheels (3) of the vehicle (1) and configured to determine an instantaneous rotational speed ($n_i$) thereof;
   second sensor elements (22), designed to be operatively coupled to the engine of the vehicle (1) and configured to detect a corresponding driving and/or braking torque thereof; and
   third sensor elements (24), coupled to the wheels (3) of the vehicle (1) and configured to determine a wheel center position as a function of a respective suspension travel.

7. The system according to claim 6, wherein said processing unit (14) is configured to:

   determine joint angles ($\beta_i$) associated with the axle shafts (10) as a function of said wheel center positions; and
   determine said instantaneous damage (Di) of the axle shafts (10) as a function of said joint angles ($\beta_i$) and of an instantaneous power, based on said torque and instantaneous rotational speed ($n_i$).

8. The system according to claim 6 or 7, wherein said processing unit (14) comprises:

   a first computing stage (30), configured to determine, as a function of wheel center position signals provided by said third sensor elements (24), respective joint angles ($\beta_i$) for the wheels (3) of the vehicle (1);
   a second computing stage (32), configured to determine, as a function of driving and/or braking torque signals provided by said second sensor elements (22) and a transmission ratio associated with said transmission system (6), corresponding values of the wheel torque ($T_i$) at the wheels (3);
   a determination stage (34), operatively coupled to said first and second computing stages (30, 32), configured to determine values of said instantaneous damage ($D_i$), as a function of respective values of joint angle ($\beta_i$) and wheel torque ($T_i$).

9. The system according to claim 8, wherein said determination stage (34) is configured to determine said values of instantaneous damage ($D_i$), using look-up tables, associated with the axle shafts (10), which correlate the values of joint angle ($\beta_i$) and wheel torque ($T_i$) to respective values of instantaneous damage ($D_i$) based on predetermined laws.

10. The system according to any one of the preceding claims, wherein said processing unit (14) is configured to implement, as said combination, a summation over time of said values of instantaneous damage ($D_i$), in order to calculate and update continuously over time said total damage ($D_{tot}$) to which the axle shafts (10) are subjected, according to the following expression:

$$D_{tot} = \sum D_i$$

11. A vehicle (1), comprising a transmission system (6) provided with axle shafts (10) coupled to wheels (3) and the system (10) for monitoring wear of said axle shafts (10), according to any one of the preceding claims.

12. The vehicle according to claim 11, comprising a control unit; wherein said processing unit (14) is configured to cause the storage of a warning of a reached wear limit of said axle shafts (10) in said control unit.

13. A method of monitoring wear of axle shafts (10) of a transmission system (6) of a vehicle (1), comprising:

   acquiring, during use of the vehicle (1), current values of operating parameters associated with the operation of the transmission system (6); determining, as a function of said current values of the operating parameters, continuously over time, instantaneous damage ($D_i$) to the axle shafts (10); determining a total damage ($D_{tot}$) to said axle shafts (10) as a combination of the instantaneous damage ($D_i$) determined over time; and estimating a wear condition of said axle shafts (10) as a function of the determination of said total damage ($D_{tot}$).

14. The method according to claim 13, comprising:

   performing a comparison between the value of total damage ($D_{tot}$), updated with each determination of a new instantaneous damage ($D_i$), and a limit threshold value ($Th_D$) indicative of reaching a relevant degree of wear of the axle shafts (10); and determining reaching of a value of total damage ($D_{tot}$) of the axle shafts (10) corresponding to an advisable maintenance or replacement, as a function of said comparison.

15. The method according to claim 14, comprising generating a warning of reached wear limit for said axle shafts (10), if the value of total damage ($D_{tot}$) is greater than said limit threshold value ($Th_D$).

FIG. 1

12

Detection sensors

| 20 | 24 | 22 | 26 | 16 |

Wheel speed $n_i$

Wheel center position (suspension potentiometer)

Driving/braking torque

Gear engaged (transmission ratio)

30

Joint angles $\beta_i$ calculation

Wheel torque $T_i$ calculation — 32

Instantaneous damage determination on joint $D_i$ — 34

Total damage $D_{tot}$ determination — 36

Damage threshold $Th_d$

Total damage comparison — 38

$Th_d >= D_{tot}$ | $Th_d < D_{tot}$

Warning generation — 39

FIG. 2

Damage/cycle

Axle-shaft torque [Nm]

Joint angle

## FIG. 3

Damage/cycle

Joint angle [° ]

Torque

## FIG. 4

## EUROPEAN SEARCH REPORT

Europäisches
Patentamt
European
Patent Office
Office européen
des brevets

**Application Number**

EP 25 22 4868

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 7 533332 B2 (TOYOTA MOTOR CORP) 14 August 2024 (2024-08-14) | 1-5, 10-15 | INV. G01M13/02 G01M17/007 |
| A | * paragraphs [0006] - [0023]; figures 1,2 * | 6-9 | |
| | ----- | | |
| A | US 11 989 982 B1 (MONAGHAN ROBERT [US] ET AL) 21 May 2024 (2024-05-21) * columns 2,8; figures 3,4 * | 6-9 | |
| | ----- | | |
| A | CN 117 473 754 A (DONGFENG COMMERCIAL VEHICLE CO LTD) 30 January 2024 (2024-01-30) * abstract * | 1-15 | |
| | ----- | | |

|   |
|---|
| **TECHNICAL FIELDS SEARCHED (IPC)** |
| G01M |

The present search report has been drawn up for all claims

| Place of search | Date of completion of the search | Examiner |
|---|---|---|
| The Hague | 12 February 2026 | Debesset, Sébastien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................................

& : member of the same patent family, corresponding document

EPO FORM 1503 03.82 (P04C01)

**EP 4 764 445 A1**

## ANNEX TO THE EUROPEAN SEARCH REPORT
## ON EUROPEAN PATENT APPLICATION NO.

EP 25 22 4868

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2026

| Patent document cited in search report | | Publication date | Patent family member(s) | | Publication date |
|---|---|---|---|---|---|
| JP 7533332 | B2 | 14-08-2024 | JP | 7533332 B2 | 14-08-2024 |
| | | | JP | 2022163954 A | 27-10-2022 |
| US 11989982 | B1 | 21-05-2024 | US | 11989982 B1 | 21-05-2024 |
| | | | US | 2025078584 A1 | 06-03-2025 |
| | | | WO | 2025049396 A1 | 06-03-2025 |
| CN 117473754 | A | 30-01-2024 | NONE | | |

EPO FORM P0459

**EP 4 764 445 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 102024000029166